# EUROPÄISCHE PATENTSCHRIFT

(11) **EP 2 801 284 B1**
(45) Veröffentlichungstag und Bekanntmachung des Hinweises auf die Patenterteilung: **24.10.2018**
(21) Anmeldenummer: 14167810.2
(22) Anmeldetag: 09.05.2014
(51) Int. Cl.: A45F 3/08, B62B 5/06, A45F 3/14

(54) **Tragesystem für schwere Lasten**
Carrying system for heavy loads
Système de transport pour poids lourds

(30) Priorität: 10.05.2013 DE 102013104863
(43) Veröffentlichungstag der Anmeldung: 12.11.2014
(73) Patentinhaber: Krimmel, Peter, 79252 Stegen (DE); Vogl, Sebastian, 79252 Stegen (DE)
(72) Erfinder: Krimmel, Peter, 79252 Stegen (DE); Vogl, Sebastian, 79252 Stegen (DE)
(74) Vertreter: Tahhan, Nader Isam Mark

(56) Entgegenhaltungen:
- DE-A1- 19 542 209
- US-A- 3 327 788
- US-A- 4 561 578
- US-A- 4 664 395
- US-A- 5 005 844
- US-A- 5 161 722
- US-A- 5 875 946
- US-A1- 2004 183 263

## Beschreibung

Die Erfindung betrifft ein Tragesystem für Schubkarren und andere schwere oder unhandliche Lasten, die vor oder seitlich vom Körper getragen werden. Insbesondere betrifft die Erfindung ein Tragesystem zum rückenschonenden Halten und Bewegen derartiger Lasten.

### Stand der Technik und Nachteile

Schubkarren werden in vielen Bereichen des Handwerks eingesetzt. So dienen sie auf dem Bau zum Transport von Steinen, Beton, schweren Werkzeuge, oder dem Abtransport von Aushub oder Schutt. Im Gartenbau werden mit Schubkarren oft erhebliche Mengen an Erde, Kies und Sand bewegt, und auch schwere Pflanzen können über gewisse Strecken transportiert werden. In der Landwirtschaft dient die Schubkarre beispielsweise dem Transport von Tiernahrung oder dem Abtransport von Dung.

Eine typische Schubkarre weist eines oder zwei Vorderräder auf, die an einem Gestell befestigt sind. Auf dem Gestell ist eine Plattform, ein Kasten oder eine Mulde angeordnet, womit die Ladung aufgenommen wird. Am hinteren Ende des Geräts befinden sich zwei in etwa horizontal verlaufende Handgriffe. Zum Bewegen der Schubkarre werden diese Handgriffe von einer Person umfasst und der hintere Teil der Schubkarre angehoben. Sobald die Schubkarre angehoben ist, kann sie durch die sie haltende Person vorwärts geschoben oder auch rückwärts gezogen werden.

Hauptnachteil bei der Benutzung einer Schubkarre ist die oft hohe Belastung, die auf den Benutzer beim Anheben der Griffe wirkt. Während die Arme passiv (auf Zug) belastet werden, müssen die Hände sich aktiv um die Griffe schließen, um ein Herabfallen derselben zu verhindern. Zudem muss die Wirbelsäule des Benutzers sämtliche Kräfte aufnehmen, welche dort als Druck- und Biegekräfte (Drehmoment) wirken. Sofern sich die Last in etwa mittig zwischen Vorderrad und Griffende befindet, trägt der Benutzer in etwa die Hälfte des Gewichts der Ladung zuzüglich der Hälfte des Gewichts der häufig ebenfalls schweren Schubkarre selber. Diese Belastung erhöht sich weiter, wenn die Ladung noch näher am hinteren Ende der Schubkarre angeordnet ist. Dies ist beispielsweise dann nötig, um das Rad bzw. die Räder bei weichem oder morastigem Untergrund zu entlasten.

Für den Fall eines einzigen Vorderrades muss die Person zusätzlich das Gewicht so ausbalancieren, dass die Schubkarre nicht zu einer Seite umfällt, was insbesondere bei beweglichen oder gar flüssigen Lasten oft schwierig ist. Dabei erhöhen sich die seitlichen, auf die Wirbelsäule wirkenden Biegekräfte erheblich.

Ein weiteres Problem besteht darin, dass der physiologisch optimale Bewegungsablauf beim Benutzen, nämlich ein Anheben der Griffe bei gestrecktem Rücken aus den Knien heraus, unter Vermeidung jeglicher gebückter Haltung, oft missachtet wird.

Ein langandauerndes Nutzen von Schubkarren und dergleichen führt folgerichtig zu Rückenproblemen beim Benutzer. Der volkswirtschaftliche Schaden, der den Krankenkassen jährlich durch die Rückenprobleme Geschädigter entsteht, der Arbeitsausfall und die damit verbundenen Folgekosten sind ein bekanntes Problem. Derartige Folgeerkrankungen sind im Verzeichnis der Berufsgenossenschaften gelistet und gehören zu den am häufigsten anerkannten Berufserkrankungen.

Aber auch die Gefahr für Benutzer, Ladung und Umfeld, die von einer umfallenden Schubkarre ausgeht, ist signifikant. Die Gründe - zu schwere Ladung, unerwartet schwieriger Untergrund oder Erschöpfung bzw. Selbstüberschätzung des Benutzers - sind bekannt, jedoch nicht zufriedenstellend gelöst.

Vergleichbare Probleme treten beim Tragen und Bewegen anderer schwerer Lasten auf. Hier sind z.B. Tragegurte bekannt, welche über die Schultern der tragenden Person gelegt werden. Neben den hohen Belastungen, die beim Anheben der Lasten auf den Rücken wirken, ist ein schnelles Ermüden problematisch. Auch führen die hohen Druckkräfte im Schulter- und Nackenbereich zu einer schmerzhaften Verarmung an Blut in den dort verlaufenden Gefäßen.

Aus dem Stand der Technik sind Rucksacksysteme hinlänglich bekannt, beispielsweise aus der Druckschrift WO 03056975 A1. Im Vergleich zu einfachen Schultergurten sind diese deutlich rückenschonender, da sie die Kräfte auf Schultern und ggf. Becken verteilen. Allerdings sind Rucksäcke nicht für mit Schubkarren vergleichbar große Lasten geeignet. Zudem befindet sich die Nutzlast bei Rucksacksystemen am Rücken und nicht vor der Person. Die Beladung ist aufwändiger, ein Einschaufeln von Gut ist kaum möglich, und beim Auf- und Ablegen des Rucksacks besteht wiederum die Gefahr einer Fehlhaltung.

Der Stand der Technik kennt daher rucksackartige Tragesysteme für Schubkarren, welche spezielle Halterungen für Schubkarren aufweisen. Eine derartige Vorrichtung ist in der Druckschrift GB 255007 A offenbart. Die Last wird dabei über Riemen, welche über die Schultern laufen, und die in Gürtelhöhe enden, aufgenommen. An diesen Enden sind Schlaufen angebracht, in denen die Griffe der Schubkarre liegen. Zusätzlich ist eine Art Gürtel vorgesehen, welcher ebenfalls einen Teil der Lasten aufnehmen kann. Eine vergleichbare Konstruktion ist aus der Druckschrift US 2006 043129 A1 bekannt.

Ein physiologisch vorteilhaftes Tragejoch zum Tragen von Lasten ist aus der Druckschrift DE 1 557 404 A bekannt. Es weist eine den Schulterrundungen angepasste Form auf und liegt in der Höhe der Schultern am oberen Rücken an. Die Aufhängungen für die Lasten befinden sich in etwa in der Frontalebene der Person, um ein Kippen nach vorn oder hinten zu vermeiden.

Die aus dem Stand der Technik bekannten Tragesysteme für vor oder seitlich von einer Person befindliche Lasten weisen ein Tragejoch oder einen Trageriemen auf, welcher mit dem Schultergürtel getragen wird. Bei einem Tragejoch liegt die Belastung auf dem Übergang zwischen Hals- und Brustwirbelsäule. Bei einem Trageriemen liegt die Last auf den Schlüsselbeinen, den Schulterblättern und der oberen Brustwirbelsäule samt zugehöriger Muskulatur auf. Die weiter oben bereits genannten Probleme sind auch hier die Folge.

Systeme zum Tragen von schweren Lasten sind ebenfalls bekannt aus US5005844, US5161722, US3327788,DE19542206, US5461578, US20040183263 und US5875946.

### Aufgabe der Erfindung und Lösung

Die Aufgabe der Erfindung ist es demnach, die aus dem Stand der Technik bekannten Probleme bei der Benutzung einer Schubkarre oder eines Tragesystems für schwere Lasten zu vermeiden. Insbesondere soll die Belastung der die Last tragenden Person verringert und die Sicherheit bei der Benutzung erhöht werden. Ein nach vorn oder hinten geneigtes Laufen beim Bewegen der Last ist zu vermeiden.

Die Aufgabe wird durch eine Vorrichtung gemäß Hauptanspruch sowie ein Verfahren nach Anspruch 15 gelöst. Weitere Ausführungsformen sind den Unteransprüchen, der Beschreibung und den Figuren zu entnehmen.

### Beschreibung

Die nachfolgenden Richtungsangaben (oben, unten, vorn, hinten, seitlich) sind aus der Sicht einer Person beschrieben, welche die erfindungsgemäße Tragvorrichtung an ihrem Oberkörper trägt.

Die Erfindung offenbart ein Tragesystem für schwere Lasten wie beispielsweise Schubkarren oder schwere Eimer, und ist zur Anbringung am Oberkörper einer Person vorgesehen. Erfindungsgemäß umfasst das Tragesystem folgende Komponenten:
- ein Tragejoch mit an gegenüber liegenden Enden desselben angeordneten Lastaufnahmepunkten, welche zur Aufnahme von Zuglasten eingerichtet sind. Das Tragejoch ist vorzugsweise aus Metall, vorzugsweise einem Leichtmetall, oder aus Holz hergestellt. Es dient der symmetrischen Anordnung von Lasten, die entweder unmittelbar am Tragejoch angebracht sind (Halter z.B. für schweres Werkzeug), oder über Seile oder Stangen am Tragejoch angreifen.

Das Tragesystem ist dadurch gekennzeichnet, dass es ferner folgende Komponenten umfasst:
- einen an der Hüfte der Person befestigbaren Hüftgurt. Der Hüftgurt ist dazu eingerichtet, auf dem Becken der Person aufzusitzen, ohne nach unten abzurutschen. Es ist klar, dass der Hüftgurt vorzugsweise Elemente wie eine Polsterung und eine Umfangsverstellung aufweist, um ausreichend bequem auch über einen längeren Zeitraum und von Personen unterschiedlicher Statur getragen werden zu können.
- ein Rückengestell mit einem unteren und einem oberen Ende, sowie mit einem zum Anliegen an den Rücken bestimmten unteren Bereich, welcher eine der Lendenlordose einer Wirbelsäule entsprechende ventrale Wölbung aufweist, und einem zum Beabstanden vom Rücken bestimmten oberen Bereich, wobei ein Übergangsbereich zwischen dem unteren Bereich (4A') und dem oberen Bereich (4B') vorhanden ist, so dass das Rückengestell im oberen Bereich (und nur dort) vom Rücken der Person beabstandbar ist, während es im unteren Bereich an den Rücken anlegbar ist. Vorzugsweise schließt der obere Bereich mit einer der Halswirbelsäulen-Lordose entsprechenden Wölbung ab, wobei sicherzustellen ist, dass die erfindungsgemäße Beabstandung auch in diesem Endbereich vorhanden ist. Mit anderen Worten, das Rückengestell ist an die anatomischen Biegungen des Rückens mit Lendenlordose, Brustkyphose und vorzugsweise auch HWS-Lordose angepasst, wobei die oberhalb der Lendenlordose verlaufenden Abschnitte vom Rücken weg gewölbt sind, so dass dort ein Abstand zwischen dem Rückengestell und dem Rücken bereitgestellt ist. Es ist klar, dass die Wölbungen des oberen Bereiches auch denen der oberen Wirbelsäule entsprechen können, solange am Übergang zwischen unterem und oberen Bereich mittels eines vom Rücken weg weisenden Absatzes oder Winkels sichergestellt wird, dass der obere Bereich vom Rücken beabstandet ist, während der untere an diesem anliegt.

Der untere Bereich umfasst das untere Ende und ist in seiner Längserstreckung so geformt, dass er bequem am Körper einer Person anliegen kann, wenn die Tragevorrichtung von dieser getragen wird. Demnach weist er eine Wölbung auf, die, vom unteren Ende ausgehend, in einem Winkel von ca. 5 - 20 Grad und bevorzugt 10 Grad von der Senkrechten nach vorn-oben verläuft, in einer Höhe von ca. 10 Zentimetern die Senkrechte tangiert, und in einem weiteren, ca. 10 Zentimeter langen Abschnitt allmählich in einen nach hinten-oben weisenden Winkel von ca. 20 Grad übergeht. Die Wölbung kann auch durch einen Kreisabschnitt beschrieben werden, welcher einen Radius von ca. 1 Meter aufweist, und ca. 15-20 Zentimeter lang ist. Es ist klar, dass alle Maßangaben von den Körpermaßen des Trägers abhängen.

Der obere Bereich schließt mittels des Übergangsbereichs unmittelbar an den unteren Bereich an. Damit er, eine entsprechende Länge vorausgesetzt, nicht am Körper der Person anliegt, sondern von diesem beabstandet ist, kann er beispielsweise als Auslauf (Verlängerung) des unteren Bereichs beginnen, was automatisch zu einer Beabstandung führt, da für ein weiteres Anliegen am Körper einer Person eine der vorherigen Wölbung entgegengesetzte Wölbung nötig wäre. Selbstverständlich sind auch andere Geometrien des oberen Bereichs denkbar, solange sichergestellt ist, dass dieser im angelegten Zustand vom Körper beabstandbar ist.

Ein entsprechende Länge vorausgesetzt, liegt im Ergebnis das Rückengestell vom Lendenwirbel bis zur Mitte der Brustwirbelsäule dicht am Körper an und hebt sich von da an vom Körper nach hinten und oben ab, bis es an seinem oberen Ende an dem Tragejoch angrenzt. Es ist jedoch klar, dass die Geometrie von der Länge des Rückengestells abhängt, da ein kurzes Rückengestell naturgemäß überhaupt nicht Gefahr läuft, im Schulterbereich am Körper anzuliegen. Vorzugsweise muss jedes Tragegestell an die anatomischen Größen des Tragenden angepasst werden.

Bevorzugt weist der Übergangsbereich zwischen oberem und unterem Bereich eine Wölbung auf, welche (im Fall einer die Rückenhöhe übersteigenden Länge des Rückengestells) stärker als die Brustkyphose dieser Wirbelsäule ist, so dass sich automatisch die Beabstandung des oberen Bereichs ergibt. Es ist klar, dass die Wölbung im Übergangsbereich bei kürzeren Längen des Rückengestells anders ausfällt. Befindet sich der Übergangsbereich in Höhe der Lendenwirbelsäule, ist die Wölbung des Übergangsbereichs geringer als die Lendenwirbelsäulenlordose. Der Übergangsbereich kann auch anstelle einer sanften Wölbung als Absatz ausgestaltet sein. Der obere Bereich selber weist vorzugsweise eine der Wirbelsäule angepasste Form auf, so dass bei einem temporären Anliegen des oberen Bereichs an den Rücken keine Druckstellen oder Verletzungen die Folge sind.
- beidseitige, hinten am Hüftgurt oder einem unteren Bereich des Rückengestells beginnende und am Hüftgurt endende Schultertrageschlaufen. Die Schultertrageschlaufen sind bevorzugt nach Art der aus dem Stand der Technik bekannten Schultertrageschlaufen für Tragerucksäcke aufgebaut. Insbesondere sind sie vorzugsweise an den nach innen weisenden, zur Auflage am Körper vorgesehenen Bereichen, gepolstert.

Erfindungsgemäß sind Tragejoch und Hüftgurt durch das Rückengestell miteinander verbunden, und das Rückengestell ist biegesteif ausgestaltet. Es ist außerdem an seinem unteren Ende mit dem Hüftgurt und optional mit den Schultergurten verbunden, so dass am Tragejoch angreifende Zugkräfte über das Rückengestell auf den Hüftgurt übertragbar sind, während das Tragejoch und das obere Ende des Rückengestells von der Person beabstandbar sind. Mit anderen Worten, das Rückengestell dient der Ableitung der am Tragejoch angreifenden Kräfte in den Hüftgurt und somit das Becken einer das Tragesystem benutzenden Person, so dass ihr Oberkörper entlastet ist. Schlüsselbeine, Schulterblätter, Halswirbelsäule und obere Brustwirbelsäule samt zugehörigen Muskelpartien sowie die gesamte Wirbelsäule werden geschont.

Nach einer besonders bevorzugten Ausführungsform liegen die Lastaufnahmepunkte des Tragejochs in einer vertikal verlaufenden Ebene, die den Hüftgurt in zwei gleich große Hälften teilt, so dass die Lastaufnahmepunkte in der durch den Körperschwerpunkt verlaufenden Frontalebene einer das Tragesystem tragenden, im Wesentlichen aufrechten Person anordbar sind.

Die beiden (gedachten) Hälften liegen demnach aus Sicht einer das Tragesystem tragenden Person vorn und hinten. Durch die Anordnung der Lastaufnahmepunkte in der die Körpermitte durchschneidenden Ebene (Frontalebene) wird erreicht, dass die Lasten sich gleichmäßig auf dem Hüftgurt verteilen. Insbesondere neigen sie den Hüftgurt (und somit die Person) weder nach vorn noch nach hinten. Die Ebene verläuft durch den Körperschwerpunkt (ein fiktiver Punkt, in welchem die Masse des gesamten Körpers vereinigt gedacht werden kann). Dieser liegt bei einer aufrecht stehenden oder gehenden Person in Hüfthöhe und etwas vor der Wirbelsäule.

Auf diese Weise wird ein nach vorn oder hinten geneigtes Laufen beim Bewegen der Last aufgrund des in der Körpermitte angeordneten Schwerpunkts des belasteten Tragesystems vermieden. Lediglich zum Beschleunigen oder Bremsen muss der Körper entsprechend geneigt werden.

Nach einer weiteren, bevorzugten Ausführungsform sind die Schultertrageschlaufen in der Länge verstellbar, so dass sie an unterschiedliche Oberkörperlängen anpassbar sind. Ferner ist bevorzugt, dass die Schultertrageschlaufen, ggf. zusätzlich, auch am oberen Bereich des Rückengestells mit einem Verbindungsstück verbunden sind.

"Befestigt" bedeutet, dass ein Abkippen des Rückengestells nach hinten verhindert wird. Hierzu können längenverstellbare Gurte oder Stangen Verwendung finden, die vorzugsweise in etwa waagerecht verlaufen und bei aufrechter Haltung spannungsfrei sind, und die nur dann unter Zug geraten, wenn das Rückengestell nach hinten abzukippen droht. Ein Abkippen nach vorn wird hingegen vom Rücken der Person, an welchem das Rückengestell dann anliegt, verhindert.

Die Längenverstellbarkeit erlaubt es, die Schultertrageschlaufen so kurz einzustellen, dass sie einen Teil der Last des Rückengestells aufnehmen können. Dies kann vorübergehend hilfreich sein, um beispielsweise das Becken kurzfristig zu entlasten, oder um den Hüftgurt neu einzustellen.

Nachfolgend werden drei Ausführungsformen beschrieben, die sich vor allem durch die Länge des Rückengestells unterscheiden.

Nach einer Ausführungsform weist das Rückengestell eine die Rückenlänge der Person übersteigende Länge auf, wobei dessen unterer Bereich bis in die Höhe der mittleren Brustwirbelsäule reicht (ca. 40 Zentimeter), und/oder wobei das Tragejoch derart geformt ist, dass in einer Draufsicht sein Mittelbereich nach hinten gewölbt ist, und in einer Rücken- und Seitenansicht sein Mittelbereich höher als seine Endbereiche liegt.

Das Tragejoch ist demnach vorzugsweise so geformt, dass sein Mittelbereich berührungsfrei hinter dem Nacken der Person entlangläuft, während die Endbereiche oberhalb der Schultern verlaufen, ohne die Schultern zu berühren.

Besonders bevorzugt sind nach dieser Ausführungsform sowohl Länge des Rückengestells als auch Tragejochform wie vorstehend beschrieben ausgestaltet. Diese Ausführungsform ist besonders für Lasten wie schwere, an Seilen, Ketten oder Stangen hängende Eimer oder Tragen geeignet, da die Enden dieser Seile oder Ketten schon bei einem leichten Anbeugen der Knie bis nah an den Boden reichen, wo sie auf einfache Weise an den Traglasten befestigt werden können.

Die Ausführungsform ist außerdem insbesondere für Schubkarren und dergleichen geeignet. Die Griffe beschreiben zum Ausleeren der Schubkarre einen großen Bogen, was - ohne Lösen der Griffe vom Tragesystem - nur dann möglich ist, wenn die o.g. Seile etc. entsprechend lang sind. Damit lange Seile während der Benutzung des Tragesystems ausreichend hoch sind (die Enden sollen in Griffhöhe der Schubkarre liegen), muss das Tragejoch entsprechend hoch angeordnet sein.

Sinngemäß gilt die Vorteilhaftigkeit einer Kombination aus Länge des Rückengestells mit der beschriebenen Tragejochform auch für die beiden anschließend dargelegten Ausführungsformen.

Nach einer anderen Ausführungsform weist das Rückengestell eine bis zur Brustwirbelsäule der Person reichende Länge auf, wobei dessen unterer Bereich bis in die Höhe der Lendenwirbelsäule (ca. 20 Zentimeter) reicht, und/oder das Tragejoch ist derart geformt, dass in einer Draufsicht seine Endbereiche nach vorn abgewinkelt sind und Längen haben, welche mindestens bis zu einer vertikal verlaufenden Ebene, die den Hüftgurt in zwei gleich große Hälften teilt, reichen.

Nach einer weiteren Ausführungsform weist das Rückengestell eine bis zur Lendenwirbelsäule der Person reichende Länge auf, wobei der untere Bereich der mit dem Hüftgurt verbunden ist, und/oder das Tragejoch derart geformt ist, dass in einer Draufsicht seine Endbereiche nach vorn abgewinkelt sind und Längen haben, welche mindestens bis zu einer vertikal verlaufenden Ebene, die den Hüftgurt in zwei gleich große Hälften teilt, reichen.

Da nach dieser Ausführungsform das Rückengestell sehr kurz ist, kann es weitgehend oder gar vollständig am Hüftgurt befestigt sein. Trotzdem ist sein oberer Bereich vom Körper der Person beabstandbar, und das Tragejoch (und nicht etwa der Hüftgurt selber) dient der Aufnahme der Lasten.

Je nach Bedarf können die Längen der nach vorn abgewinkelten Endbereiche auch größer sein. Dies ist beispielsweise zum Tragen einer Motorsense vorteilhaft. Da deren Motor hinter dem Körper getragen wird und deutlich schwerer als ihre übrige Komponenten sind, können die Lastaufnahmepunkte weiter nach vorn verlagert werden. Insbesondere zum Tragen einer Motorsense kann auch die Ausführungsform mit mittlerer Länge des Rückengestells vorteilhaft sein.

Nach einer bevorzugten Ausführungsform umfasst das Rückengestell drei vertikal verlaufende, biegesteife und nicht unmittelbar miteinander verbundene Stangen, welche mit ihren oberen Enden an drei voneinander beabstandeten und symmetrisch am Tragejoch verteilten Punkten an demselben fixiert sind. Die Stangen sind demnach jede für sich am Hüftgurt befestigt, wo sie beispielsweise in dafür vorgesehenen Taschen stecken, oder mittels Schrauben oder dergleichen fixiert sind.

Selbstverständlich sind auch Ausführungsformen mit einer, zwei, vier, fünf oder mehr Stangen möglich.

Nach einer alternativen Ausführungsform besteht das Rückengestell aus einer Platte mit optionalen Aussparungen, welche an ihrem unteren Ende am Hüftgurt befestigt ist, und an ihrem oberen Ende das Tragejoch trägt. Der untere und obere Bereich ist in analoger Weise zu obigen Erläuterungen ausgestaltet.

Als Material für Stangen oder Platte kommen insbesondere die für das Tragejoch vorgesehenen Materialien in Betracht.

Ferner ist bevorzugt, dass das Rückengestell Rückenpolster und/oder einen Brustgurt umfasst. Im unteren Bereich angeordnete Rückenpolster erlauben ein bequemeres Tragen, im oberen Bereich angeordnete Rückenpolster dienen der Sicherheit und der Bequemlichkeit beim Auf- und Abladen der Lasten. Ein Brustgurt, welcher vorzugsweise die beiden Schultertrageschlaufen miteinander verbindet, erhöht ebenfalls Sicherheit und Bequemlichkeit.

Nach einer weiteren Ausführungsform umfasst das Tragesystem ferner optionale Feststellriemen, welche jeweils an den beiden außenliegenden Rändern (wie insbesondere den außenliegenden Stangen) des Rückengestells sowie den Oberseiten der Schultertrageschlaufen befestigt sind, so dass der Abstand zwischen Rückengestell und Körper der Person einstellbar ist. Derartige Feststellriemen sind aus dem Stand der Technik hinlänglich bekannt und erfüllen auch bei der erfindungsgemäßen Vorrichtung den Zweck, ein bequemes und sicheres Tragen der Lasten zu gewährleisten, indem der Schwerpunkt der beladenen Vorrichtung nachträglich leicht angepasst wird.

Nach einer weiteren Ausführungsform umfasst das Tragesystem optional vor und/oder hinter dem Rücken der Person anzuordnende Quergurte, die mit den Schultertrageschlaufen verbunden sind. Auf diese Weise wird sichergestellt, dass die Schultertrageschlaufen nicht von den Schultern rutschen, indem sie sich zu weit voneinander entfernen.

Ferner ist bevorzugt, dass das Tragejoch an seiner zur Person weisenden Seite eine Polsterung aufweist. Je nach Positionierung des Tragejochs ist die Polsterung demnach an seiner Unterseite, Vorderseite und/oder Oberseite angebracht. Diese Polsterung dient dem Schutz der Person und ist insbesondere dann sinnvoll, wenn das Tragejoch über den Schultern angeordnet ist. Aber auch in den übrigen, oben beschriebenen Fällen ist eine Polsterung bevorzugt, um Verletzungen z.B. durch Scheuern zu verhindern.

Nach einer anderen Ausführungsform ist im oder am vorderen Teil mindestens einer Schultertrageschlaufe eine Aussteifung zur Vermeidung von Bückbewegungen einer das Tragesystem benutzenden Person vorgesehen. Diese Aussteifung dient demnach dazu, ein Bücken der Person zu erschweren, da bei derartigen Bewegungen die Wirbelsäule gebeugt wird, was physiologisch unvorteilhaft ist. Somit wird ein Benutzer des Tragesystems dazu gezwungen, die physiologisch weniger belastende Position mit gestreckter Wirbelsäule einzunehmen, wenn das Tragesystem be- oder entladen wird. Das Tragesystem beugt somit Rückenproblemen aktiv vor.

Das erfindungsgemäße Tragesystem kann auch als Korsett oder Exoskelett ausgeführt sein, bei welchem die oben genannten Komponenten sinngemäß vorhanden und in erfindungsgemäßer Weise einander zugeordnet sind. Rückengestell, Schultertrageschlaufen und Hüftgurt sind demnach in ein Korsett oder Exoskelett integriert. Vorhanden ist in allen Fällen die Art der Konstruktion, nach welcher die Zugkräfte über das Joch und das Rückengestell in den Hüftgurt geleitet werden. Auch die Schultertrageschlaufen sind dann Teil des Korsetts oder Exoskeletts.

Nach einer insbesondere für Schubkarren geeigneten Ausführungsform umfasst das Tragesystem Griffaufnahmen, in welchen die Handgriffe einer Schubkarre aufnehmbar sind. Die Griffaufnahmen sind beidseitig an mit den Lastaufnahmepunkten verbundenen Riemen, Ketten oder Stangen angeordnet. Es ist klar, dass hierzu eine ausreichende Länge des Rückengestells nötig ist, weshalb das Tragejoch vorzugsweise oberhalb der Schulter angeordnet ist.

Die Griffaufnahmen stellen demnach eine form-, kraft- und/oder reibschlüssige Aufnahme für die Griffe einer Schubkarre bereit.

Vorzugsweise weisen sie eine Gummierung auf, welche rutschfest ist, jedoch keine feste Verbindung zum Schubkarrengriff zulässt, so dass ein Loslassen der Schubkarre jederzeit möglich ist.

Vorzugsweise umfasst eine Griffaufnahme eine nach vorne offene Hülse, deren Innendurchmesser den Außendurchmesser des Griffes einer Schubkarre um einen Faktor größer als 1 übersteigt, wobei der Faktor vorzugsweise 1,05 bis 2,0 beträgt, was einem Übermaß von 5% bis 100% bezogen auf den Außendurchmesser des Griffes entspricht.

Alternativ umfasst eine Griffaufnahme eine nach vorne und oben offene Schale, deren Innendurchmesser dem Außendurchmesser des Griffes einer Schubkarre entspricht oder diesen um einen Faktor größer als 1 übersteigt.

Eine andere Alternative stellen handschuhähnliche Griffaufnahmen dar, in welche die tragende Person ihre Hände einführen kann, und die außerdem eine zur Aufnahme des Schubkarrengriffs geeignete Öffnung aufweisen. Die mechanischen Belastungen von Hand und Handgelenk werden vermindert, indem die Tragkräfte vom Schubkarrengriff durch den Tragehandschuh direkt auf das Tragesystem übertragen werden. Zudem wird die Hand durch den Handschuh vor dem Griff geschützt.

Vorzugsweise ist der Innendurchmesser anpassbar, so dass verschieden große Schubkarrengriffe sicher gehalten werden können, ohne die Griffaufnahme auswechseln zu müssen.

Nach einer anderen Ausführungsform wirkt die Griffaufnahme mit dem Innenraum des dann hohlen Griffes einer Schubkarre form-, kraft- und/oder reibschlüssig zusammen. Sie umfasst den Griff demnach nicht, sondern wird in den typischerweise als Rohr vorliegenden Griff eingeführt und vorzugsweise reibschlüssig verankert.

Die beschriebenen Griffaufnahmen erlauben ein leichtes Ein- und Aushängen der Schubkarre, was typischerweise sehr oft geschieht. Das Tragesystem selber wird jedoch nur einmal an- oder abgelegt. Die Belastung, aber auch die Gefährdung des Trägers werden signifikant reduziert, da beispielsweise eine in eine Baugrube fallende Schubkarre nicht mehr am Schiebenden bzw. an dessen Tragegestell hängenbleibt und diesen mit sich zieht.

Die Erfindung betrifft auch ein Verfahren zur Verwendung einer Vorrichtung gemäß vorstehender Definition durch eine Person. Es umfasst, neben dem Bereitstellen des Tragesystems, die Schritte:
- Anlegen der Schultertrageschlaufen und Justieren derselben, so dass sich der Hüftgurt in der Höhe des Beckens der Person befindet;
- Anlegen und Festziehen des Hüftgurtes;
- Justieren des Rückengestells, so dass nur dessen unterer Bereich am Rücken der Person anliegt, während sein oberer Bereich von diesem beabstandet ist;
- Anbringen der Last an den Lastaufnahmepunkten des Tragejochs;
- Tragen oder Bewegen der Last.

Dabei werden am Tragejoch angreifende Zugkräfte über das Rückengestell auf den Hüftgurt übertragen, ohne dass das Tragejoch und der obere Bereich des Rückengestells die Person berühren. Zur Vermeidung von Wiederholungen wird auf die vorstehenden Erläuterungen hinsichtlich des erfindungsgemäßen Tragesystems verwiesen.

Das erfindungsgemäße Tragesystem löst in vorteilhafter Weise die aus dem Stand der Technik bekannten Probleme bei der Benutzung einer Schubkarre oder eines Tragesystems für schwere Lasten. Es verringert die Belastung insbesondere des Oberkörpers der die Last tragenden Person, und es erhöht die Sicherheit bei der Benutzung. Durch optionales Vorsehen einer Sperre kann auch ein physiologisch unvorteilhaftes Beugen der Wirbelsäule verhindert werden. Ein nach vorn oder hinten geneigtes Laufen beim Bewegen der Last wird aufgrund des vorzugsweise in der Körpermitte angeordneten Schwerpunkts des belasteten Tragesystems vermieden.

### Figurenbeschreibung

- **Figur 1**: zeigt eine erste Ausführungsform des erfindungsgemäßen Tragesystems in einer Seitenansicht.
- **Figur 2**: zeigt das Tragesystem nach dieser Ausführungsform in einer Rückenansicht.
- **Figur 3**: zeigt das Tragesystem nach dieser Ausführungsform in einer Draufsicht.
- **Figur 4**: zeigt eine zweite Ausführungsform des erfindungsgemäßen Tragesystems in einer Seitenansicht.
- **Figur 5**: zeigt das Tragesystem nach dieser Ausführungsform in einer Rückenansicht.
- **Figur 6**: zeigt das Tragesystem nach dieser Ausführungsform in einer Draufsicht.
- **Figur 7**: zeigt eine dritte Ausführungsform des erfindungsgemäßen Tragesystems in einer Seitenansicht.
- **Figur 8**: zeigt das Tragesystem nach dieser Ausführungsform in einer Rückenansicht.

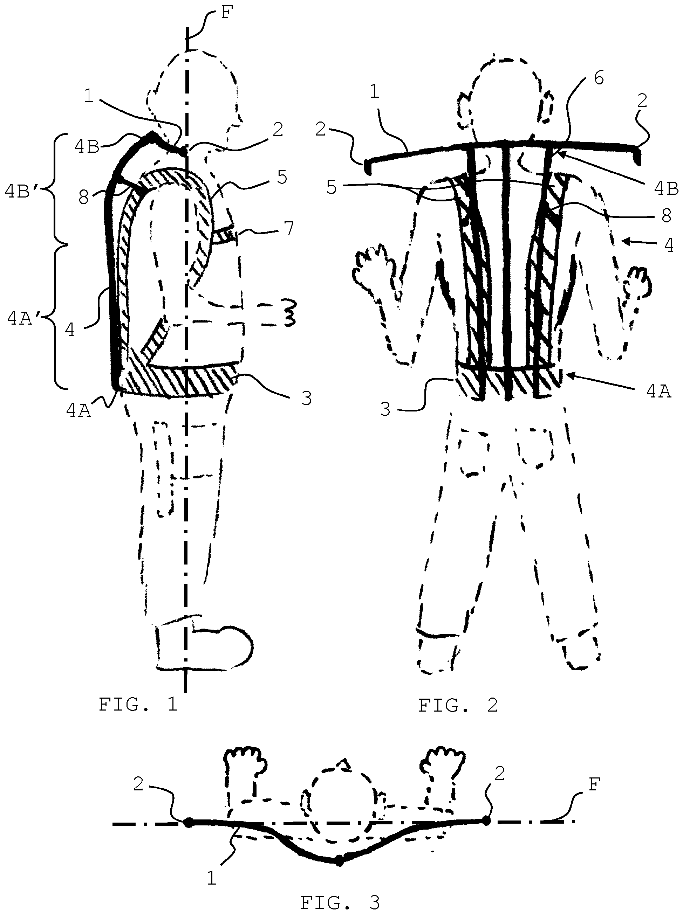

In den **Fig. 1-3** ist eine erste Ausführungsform des erfindungsgemäßen Tragesystems dargestellt. Dieses umfasst einen Hüftgurt 3, welcher am Becken der Person befestigt ist. Am hinteren Bereich des Hüftgurts 3 sind drei biegesteife Stangen 6 angebracht (s. **Fig. 2**, nur eine mit Bezugszeichen versehen), welche sich nicht gegenseitig unmittelbar berühren. In der gezeigten Ausführungsform sind die Stangen 6 mit ihren oberen Enden an drei voneinander beabstandeten und symmetrisch am Tragejoch 1 verteilten Punkten an demselben fixiert. Somit bilden die Stangen 6 ein Rückengestell 4, welches sich hinter der Person befindet, an deren Rücken es teilweise anliegt.

Dazu umfasst das Rückengestell 4 einen zum Anliegen an den Rücken bestimmten unteren Bereich 4A', welcher eine der Wölbung des Rückens der Person entsprechende Wölbung aufweist, und einen zum Beabstanden vom Rücken bestimmten oberen Bereich 4B'. Letzterer ist derart nach hinten gewölbt, dass das Rückengestell 4 dort vom Körper der Person beabstandet ist.

Außerdem umfasst das Tragesystem beidseitige, am Hüftgurt 3 beginnende und endende Schultertrageschlaufen 5. Diese werden an ihrer Vorderseite mit einem Brustgurt 7 zusammengehalten. Außerdem sind sie beidseitig über je ein Verbindungsstück 8 mit dem Rückengestell verbunden (in Fig. 1 nur das rechte dargestellt), um ein unkontrolliertes Abkippen desselben nach Hinten zu vermeiden.

Am oberen Ende 4B des Rückengestells 4 ist das Tragejoch 1 angeordnet, welches mit dem Rückengestell 4 fest verbunden ist. An den gegenüber liegenden Enden des Tragejochs 1 sind Lastaufnahmepunkte 2 angeordnet, welche zur Aufnahme von Zuglasten (nicht gezeigt) eingerichtet sind.

Die gezeigte Ausführungsform weist ein Rückengestell 4 mit einer die Rückenlänge der Person übersteigenden Länge auf, wobei der untere Bereich 4A' des Rückengestells 4 in etwa bis in die Höhe der Brustwirbelsäule (ohne Bezugszeichen) reicht. Das Tragejoch 1 ist derart geformt, dass in einer Draufsicht (s. **Fig. 3**) sein Mittelbereich (ohne Bezugszeichen) nach hinten gewölbt ist, und in einer Rücken- und Seitenansicht (Fig. 1 bzw. 2) liegt sein Mittelbereich höher als seine Endbereiche mit den Lastaufnahmepunkten 2.

Die Lastaufnahmepunkte 2 des Tragejochs 1 liegen in einer vertikal verlaufenden Ebene F (in Fig. 1 und 3 gezeigt), die den Hüftgurt 3 in zwei gleich große Hälften teilt, nämlich eine vordere und eine hintere Hälfte, so dass die Lastaufnahmepunkte 2 in der Frontalebene F einer das Tragesystem tragenden Person angeordnet sind.

Diese Ausführungsform ist insbesondere zum Tragen von Lasten wie schweren, an Seilen, Ketten oder Stangen hängenden Eimern oder Tragen geeignet, da die Enden dieser Seile oder Ketten schon bei einem leichten Vorkippen des Körpers um wenige, beispielsweise 10 Grad, bis nah an den Boden reichen, wo sie auf einfache Weise an den Traglasten befestigt werden können (nicht dargestellt). Durch anschließendes Vorbewegen des Körpers unter Einknicken der Knie wird vor dem Anheben wieder eine aufrechte Haltung angenommen, bevor durch Strecken der Knie die Last angehoben werden kann. Auch Schubkarren (nicht gezeigt), die zum Ausschütten ohne Trennen vom Tragesystem lange Seile oder Ketten benötigen, werden vorzugsweise mit dieser Ausführungsform bewegt.

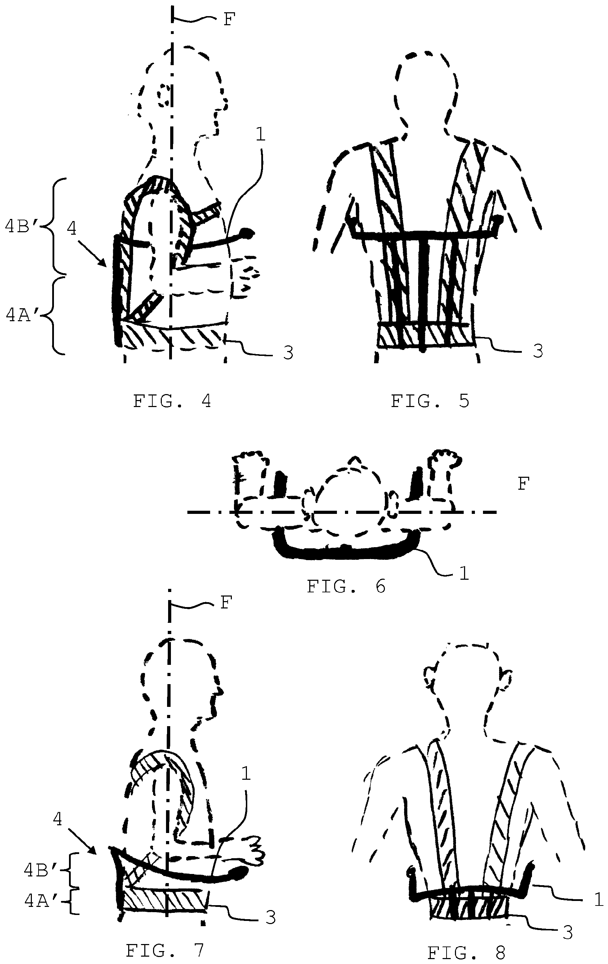

In den **Fig. 4-6** ist eine zweite Ausführungsform des erfindungsgemäßen Tragesystems dargestellt. Diese unterscheidet sich von der vorhergehend beschriebenen Ausführungsform dadurch, dass das Rückengestell 4 nur eine bis zur Brustwirbelsäule der Person reichende Länge aufweist, wobei der untere Bereich 4A' des Rückengestells 4 bis lediglich in die Höhe der Lendenwirbelsäule reicht. Zudem ist das Tragejoch 1 derart geformt, dass in einer Draufsicht (s. **Fig. 6**) seine Endbereiche (ohne Bezugszeichen) nach vorn abgewinkelt sind, so dass sie beiderseits zur Körpervorderseite verlaufen. Nach einer nicht dargestellten Ausführungsform kann das Tragejoch als einfacher Bogen ausgeführt sein, dessen Endbereiche ebenfalls zur Körpervorderseite verlaufen. Ferner haben sie Längen, welche mindestens bis zur der Ebene F reichen, die den Hüftgurt 3 in zwei gleich große Hälften teilt, und welche mit der Frontalebene F der Person, die definitionsgemäß durch ihre Körpermitte verläuft, zusammenfällt. In der gezeigten Ausführungsform überragen die Endbereiche die Brust der Person. Verbindungsstücke sind nicht dargestellt, vorzugsweise jedoch ebenfalls vorhanden.

Diese Ausführungsform eignet sich insbesondere für schwere Werkzeuge wie z.B. Motorsensen (nicht gezeigt).

In **Fig. 7** und **Fig. 8** ist eine dritte Ausführungsform des erfindungsgemäßen Tragesystems dargestellt. Nach dieser Ausführungsform weist das Rückengestell 4 eine bis zur Lendenwirbelsäule der Person reichende Länge auf. Der untere Bereich 4A' ist mit dem Hüftgurt 3 verbunden. Das Tragejoch 1 ist derart geformt, dass in einer Draufsicht seine Endbereiche nach vorn abgewinkelt sind und Längen haben, welche mindestens bis zu einer vertikal verlaufenden Ebene F, die den Hüftgurt 3 in zwei gleich große Hälften teilt, reichen. Insofern ist das Tragejoch 1 mit demjenigen der zuvor beschriebenen Ausführungsform vergleichbar. Weitere vorteilhafte geometrische Ausgestaltungen des Tragejochs 1 gehen aus der Fig. 7 und 8 hervor.

### Bezugszeichenliste

- 1: Tragejoch
- 2: Lastaufnahmepunkt
- 3: Hüftgurt
- 4: Rückengestell
- 4A: unteres Ende
- 4B: oberes Ende
- 4A': unterer Bereich
- 4B': oberer Bereich
- 5: Schultertrageschlaufen
- 6: Stange
- 7: Brustgurt
- 8: Verbindungsstück
- F: Ebene, Frontalebene

## Patentansprüche

1. Tragesystem für schwere Lasten, die vor oder seitlich vom Körper getragen werden, zur Anbringung am Oberkörper einer Person, umfassend
- ein Tragejoch (1) mit an gegenüber liegenden Enden desselben angeordneten Lastaufnahmepunkten (2), welche zur Aufnahme von Zuglasten eingerichtet sind;
**dadurch gekennzeichnet, dass** das Tragesystem ferner
- einen an der Hüfte der Person befestigbaren Hüftgurt (3);
- ein Rückengestell (4) mit einem unteren und einem oberen Ende (4A, 4B), sowie mit einem zum Anliegen an den Rücken bestimmten unteren Bereich (4A'), welcher eine der Lendenlordose einer Wirbelsäule entsprechende ventrale Wölbung aufweist, und einem zum Beabstanden vom Rücken bestimmten oberen Bereich (4B'), wobei ein Übergangsbereich zwischen dem unteren Bereich (4A') und dem oberen Bereich (4B') vorhanden ist, so dass das Rückengestell (4) im oberen Bereich (4B') vom Rücken der Person beabstandbar ist;
- beidseitige, am Hüftgurt (3) oder einem unteren Bereich (4A') des Rückengestells (4) beginnende und am Hüftgurt (3) endende Schultertrageschlaufen (5);
umfasst, wobei Tragejoch (1) und Hüftgurt (3) durch das Rückengestell (4) miteinander verbunden sind, und wobei das Rückengestell (4) biegesteif und an seinem unteren Ende (4A) mit dem Hüftgurt (3) verbunden ist, so dass am Tragejoch (1) angreifende Zugkräfte über das Rückengestell (4) auf den Hüftgurt (3) übertragbar sind, während das Tragejoch (1) und das obere Ende (4B) des Rückengestells (4) von der Person beabstandbar sind.

2. Tragesystem nach Anspruch 1, wobei die Lastaufnahmepunkte (2) des Tragejochs (1) in einer vertikal verlaufenden Ebene (F) liegen, die den Hüftgurt (3) in zwei gleich große Hälften teilt, so dass die Lastaufnahmepunkte (2) in der durch den Körperschwerpunkt verlaufenden Frontalebene (F) einer das Tragesystem tragenden Person anordbar sind.

3. Tragesystem nach Anspruch 1 oder 2, bei dem die Schultertrageschlaufen (5) in der Länge verstellbar und/oder am oberen Bereich (4B') des Rückengestells (4) mit mindestens einem Verbindungsstück (8) verbunden sind.

4. Tragesystem nach einem der Ansprüche 1 bis 3, bei dem das Rückengestell (4) eine die Rückenlänge der Person übersteigende Länge aufweist, wobei dessen unterer Bereich (4A') bis in die Höhe der Brustwirbelsäule reicht, und/oder wobei das Tragejoch (1) derart geformt ist, dass in einer Draufsicht sein Mittelbereich nach hinten gewölbt ist, und in einer Rücken- und Seitenansicht sein Mittelbereich höher als seine Endbereiche liegt.

5. Tragesystem nach einem der Ansprüche 1 bis 3, bei dem das Rückengestell (4) eine bis zur Brustwirbelsäule der Person reichende Länge aufweist, wobei dessen unterer Bereich (4A') bis in die Höhe der Lendenwirbelsäule reicht, und/oder wobei das Tragejoch (1) derart geformt ist, dass in einer Draufsicht seine Endbereiche nach vorn abgewinkelt sind und Längen haben, welche mindestens bis zu einer vertikal verlaufenden Ebene (F), die den Hüftgurt (3) in zwei gleich große Hälften teilt, reichen.

6. Tragesystem nach einem der Ansprüche 1 bis 3, bei dem das Rückengestell (4) eine bis zur Lendenwirbelsäule der Person reichende Länge aufweist, wobei der untere Bereich (4A') mit dem Hüftgurt (3) verbunden ist, und/oder wobei das Tragejoch (1) derart geformt ist, dass in einer Draufsicht seine Endbereiche nach vorn abgewinkelt sind und Längen haben, welche mindestens bis zu einer vertikal verlaufenden Ebene (F), die den Hüftgurt (3) in zwei gleich große Hälften teilt, reichen.

7. Tragesystem nach einem der vorhergehenden Ansprüche, wobei das Rückengestell (4) drei vertikal verlaufende, biegesteife und nicht unmittelbar miteinander verbundene Stangen (6) umfasst, welche mit ihren oberen Enden an drei voneinander beabstandeten und symmetrisch am Tragejoch (1) verteilten Punkten an demselben fixiert sind.

8. Tragesystem nach einem der vorhergehenden Ansprüche, wobei das Rückengestell (3) ferner Rückenpolster und/oder einen Brustgurt (7) umfasst.

9. Tragesystem nach einem der vorhergehenden Ansprüche, wobei dasselbe ferner Feststellriemen umfasst, welche jeweils an den beiden außenliegenden Rändern des Rückengestells (4) sowie den Oberseiten der Schultertrageschlaufen (5) befestigt sind, so dass der Abstand zwischen Rückengestell (4) und Körper der Person einstellbar ist.

10. Tragesystem nach einem der vorhergehenden Ansprüche, ferner umfassend vor und/oder hinter dem Rücken der Person anzuordnende Quergurte, die mit den Schultertrageschlaufen (5) verbunden sind.

11. Tragesystem nach einem der vorhergehenden Ansprüche, wobei das Tragejoch (1) an seiner zur Person weisenden Seite eine Polsterung aufweist.

12. Tragesystem nach einem der vorhergehenden Ansprüche, wobei im oder am vorderen Teil mindestens einer Schultertrageschlaufe (5) eine Aussteifung zur Vermeidung von Bückbewegungen einer das Tragesystem benutzenden Person vorgesehen ist.

13. Tragesystem nach einem der vorhergehenden Ansprüche, bei dem Rückengestell (4), Schultertrageschlaufen (5) und Hüftgurt (3) in ein Korsett oder Exoskelett integriert sind.

14. Tragesystem nach einem der vorhergehenden Ansprüche, ferner umfassend Griffaufnahmen, in welchen Handgriffe einer Schubkarre aufnehmbar sind, wobei die Griffaufnahmen beidseitig an mit den Lastaufnahmepunkten (2) verbundenen Riemen, Ketten oder Stangen angeordnet sind.

15. Verfahren zur Verwendung einer Vorrichtung gemäß Definition in einem der vorhergehenden Ansprüche durch eine Person, umfassend die Schritte:
- Bereitstellen des Tragesystems;
- Anlegen der Schultertrageschlaufen (5) und Justieren derselben, so dass sich der Hüftgurt (3) in der Höhe des Beckens der Person befindet;
- Anlegen und Festziehen des Hüftgurtes (3);
- Justieren des Rückengestells (4), so dass nur dessen unterer Bereich (4A') am Rücken der Person anliegt, während sein oberer Bereich (4B') von diesem beabstandet ist;
- Anbringen der Last an den Lastaufnahmepunkten (2) des Tragejochs (1);
- Tragen oder Bewegen der Last;
wobei am Tragejoch (1) angreifende Zugkräfte über das Rückengestell (4) auf den Hüftgurt (3) übertragen werden, ohne dass das Tragejoch (1) und der obere Bereich (4B') des Rückengestells (4) die Person berühren.

## Claims

1. Carrier system for heavy loads being carried in front of or lateral to the body, for attachment at the upper body of a person, comprising
- a carrying yoke (1) with loading points (2) being arranged at opposing ends of the same, the loading points (2) being configured for accepting tensile loads;
**characterized in that** the carrier system further comprises
- a waistbelt (3) being attachable at the person's waist;
- a back frame (4) with a lower and an upper end (4A, 4B), as well as a lower region (4A') intended for resting against the back, said region (4A') having a ventral curvature following the lumbar lordosis of a spine, and an upper region (4B') intended for spacing the back frame (4) apart from the back, wherein a transition region is present between the lower region (4A') and the upper region (4B'), such that the back frame (4) can be spaced apart in the upper region (4A') from the back of person's back;
- bilateral shoulder carrying straps (5) which begin at the waistbelt (3) or at a lower region (4A') of the back frame (4), and which end at the waistbelt (3);
wherein carrying yoke (1) and waistbelt (3) are interconnected by means of the back frame (4), and wherein the back frame (4) is rigid and connected at its lower end (4A) with the waistbelt (3), such that tensile loads acting on the carrying yoke (1) can be transferred via the back frame (4) onto the waistbelt (3), while the carrying yoke (1) and the upper end (4B) of the back frame (4) can be spaced apart from the person.

2. Carrier system according to claim 1, wherein the loading points (2) of the carrying yoke (1) lie in a vertical plane (F) which separates the waistbelt (3) in two halves of identical size, so that the loading points (2) can be arranged in the frontal plane (F) which runs through the body's centre of gravity of a person wearing the carrier system.

3. Carrier system according to claim 1 or 2, wherein the shoulder carrying straps (5) are adjustable in length, and/or are connected to the upper region (4B') of the back frame (4) with at least one connecting piece (8).

4. Carrier system according to any of claims 1 to 3, wherein the back frame (4) has a length exceeding the length of the person's back, wherein its lower region (4A') reaches to the level of the thoracic spine, and/or wherein the carrying yoke (1) is shaped in a way such that in a top view, its middle region is curved backwards, and in a rear and side view, its middle region is located higher than its end regions.

5. Carrier system according to any of claims 1 to 3, wherein the back frame (4) has a length reaching the person's thoracic spine, wherein its lower region (4A') reaches up to the level of the lumbar spine, and/or wherein the carrying yoke (1) is shaped in a way such that in a top view, its end regions are angled frontwards and have lengths which reach at least to a vertically running plane (F) which separates the waistbelt (3) in two halves of identical size.

6. Carrier system according to any of claims 1 to 3, wherein the back frame (4) has a length reaching the person's lumbar spine, wherein the lower region (4A') is connected to the waistbelt (3), and/or wherein the carrying yoke (1) is shaped in a way such that in a top view, its end regions are angled frontwards and have lengths which reach at least to a vertically running plane (F) which separates the waistbelt (3) in two halves of identical size.

7. Carrier system according to any of the preceding claims, wherein the back frame (4) comprises three vertically oriented, rigid, and not directly interconnected rods (6) which are affixed to the carrying yoke (1) with their upper ends to three points which are symmetrically distributed and spaced apart from each other along the carrying yoke (1) .

8. Carrier system according to any of the preceding claims, wherein the back frame (4) further comprises back cushions and/or a chest strap (7).

9. Carrier system according to any of the preceding claims, wherein the same further comprises fixation belts which are respectively attached to both external edges of the back frame (4) as well as to the upper sides of the shoulder carrying straps (5), such that the distance between back frame (4) and the person's body is adjustable.

10. Carrier system according to any of the preceding claims, further comprising cross belts which can be arranged in front of and/or behind the back of the person, and which are connected with the shoulder carrying straps (5).

11. Carrier system according to any of the preceding claims, wherein the carrying yoke (1) has, at its side facing the person, a cushion.

12. Carrier system according to any of the preceding claims, wherein in or at the front portion of at least one shoulder carrying strap (5) a reinforcement is provided for preventing a bending motion of a person using the carrier system.

13. Carrier system according to any of the preceding claims, wherein back frame (4), shoulder carrying straps (5) and waistbelt (3) are integrated into a corset or exoskeleton.

14. Carrier system according to any of the preceding claims, further comprising handle mounts in which handles of a wheelbarrow can be accommodated, wherein the handle mounts are bilaterally arranged at belts, chains, or rods which are connected to the loading points (2).

15. Method for the usage of an apparatus as defined in any of the preceding claims by a person, comprising the steps:
- providing the carrier system;
- buckling on of the shoulder carrying straps (5) and adjusting them so that the waistbelt (3) is located at the level of the person's pelvis;
- buckling on and tightening the waistbelt (3);
- adjusting the back frame (4) so that only its lower region (4A') rests against the person's back, while its upper region (4B') is spaced apart from the same;
- mounting the payload to the loading points (2) of the carrying yoke (1);
- carrying or moving the payload;
wherein tensile forces acting onto the carrying yoke (1) are transferred via the back frame (4) to the waistbelt (3) without the carrying yoke (1) and the upper region (4B') contacting the person.

## Revendications

1. Système de portage de charges lourdes qui sont portées devant le corps ou sur le côté du corps, destiné à être placé sur le torse d'une personne, comprenant :
- un joug de portage (1) doté de points récepteurs de charge (2) disposés sur des extrémités opposées de celui-ci, lesquels sont conçus pour réceptionner des charges de tractions ;
**caractérisé en ce que** le système de portage comprend en outre :
- une ceinture de hanche (3) fixable sur la hanche de la personne ;
- un armature dorsale (4) comportant une extrémité inférieure et une extrémité supérieure (4A, 4B), ainsi qu'une zone inférieure (4A') destinée s'appuyer contre le dos, laquelle présente un bombement ventral correspondant à la lordose lombaire d'une colonne vertébrale, et une zone supérieure (4B') destinée à écarter du dos, une zone transitoire étant présente entre la zone inférieure (4A') et la zone supérieure (4B'), de sorte que l'armature dorsale (4) peut être distancée du dos de la personne dans la zone supérieure (4B') ;
- des bretelles bilatérales (5) commençant au niveau de la ceinture de hanche (3) ou au niveau de la zone inférieure (4A') de l'armature dorsale (4) et se terminant au niveau de la ceinture de hanche (3) ;
le joug de portage (1) et la ceinture de hanche (3) étant reliés entre eux par l'armature dorsale (4), et l'armature dorsale (4) étant résistante à la flexion et étant reliée à la ceinture de hanche (3) au niveau de son extrémité inférieure (4A), de sorte que les forces de traction ayant prise sur le joug de portage (1) sont transmissibles à la ceinture de hanche (3) par l'intermédiaire de l'armature dorsale (4), alors que le joug de portage (1) et l'extrémité supérieure (4B) de l'armature dorsale (4) peuvent être distancés de la personne.

2. Système de portage selon la revendication 1, dans lequel les points récepteurs de charge (2) du joug de portage (1) sont situés dans un plan (F) s'étendant verticalement, lequel divise la ceinture de hanche (3) en deux moitiés de taille identique, de sorte que les points récepteurs de charge (2) peuvent être disposés dans le plan frontal (F), s'étendant à travers le centre de gravité du corps, d'une personne portant le système de portage.

3. Système de portage selon la revendication 1 ou 2, dans lequel les bretelles (5) sont réglables en longueur et/ou sont reliées à au moins une pièce de liaison (8) dans la zone supérieure (4B') de l'armature dorsale (4).

4. Système de portage selon l'une quelconque des revendications 1 à 3, dans lequel l'armature dorsale (4) présente une longueur dépassant la longueur du dos de la personne, la zone inférieure (4A') de l'armature dorsale allant jusqu'à la hauteur de la colonne thoracique, et/ou le joug de portage (1) étant formé de manière à ce que, dans une vue de dessus, sa zone centrale soit bombée vers l'arrière, et que, dans une vue de dos et une vue de côté, sa zone centrale soit située plus haut que ses zones terminales.

5. Système de portage selon l'une quelconque des revendications 1 à 3, dans lequel l'armature dorsale (4) présente une longueur allant jusqu'à la colonne thoracique de la personne, la zone inférieure (4A') de l'armature dorsale allant jusqu'à la hauteur de la colonne lombaire, et/ou le joug de portage (1) étant formé de manière à ce que, dans une vue de dessus, ses zones terminales soient courbées vers l'avant et aient des longueurs qui aillent au moins jusqu'à un plan (F) s'étendant verticalement, lequel divise la ceinture de hanche (3) en deux moitiés de taille identique.

6. Système de portage selon l'une quelconque des revendications 1 à 3, dans lequel l'armature dorsale (4) présente une longueur allant jusqu'à la colonne lombaire de la personne, la zone inférieure (4A') étant reliée à la ceinture de hanche (3), et/ou le joug de portage (1) étant formé de manière à ce que, dans une vue de dessus, ses zones terminales soient courbées vers l'avant et aient des longueurs qui aillent au moins jusqu'à un plan (F) s'étendant verticalement, lequel divise la ceinture de hanche (3) en deux moitiés de taille identique.

7. Système de portage selon l'une quelconque des revendications précédentes, dans lequel l'armature dorsale (4) comprend trois barres (6) s'étendant verticalement, résistantes à la flexion et reliées entre elles de manière non directe, lesquelles, avec leurs extrémités supérieures, sont fixées sur le joug de portage (1) dans trois points distancés les uns des autres et répartis de manière symétrique sur celui-ci.

8. Système de portage selon l'une quelconque des revendications précédentes, dans lequel l'armature dorsale (4) comprend en outre un rembourrage dorsal et/ou une sangle de poitrine (7).

9. Système de portage selon l'une quelconque des revendications précédentes, lequel comprend en outre des sangles d'attache, lesquelles sont respectivement fixées sur les deux bords extérieurs de l'armature dorsale (4) ainsi que sur les côtés supérieurs des bretelles (5), de sorte que l'écart entre l'armature dorsale (4) et le corps de la personne est réglable.

10. Système de portage selon l'une quelconque des revendications précédentes, comprenant en outre des sangles transversales à disposer devant et/ou derrière le dos de la personne, lesquelles sont reliées aux bretelles (5).

11. Système de portage selon l'une quelconque des revendications précédentes, dans lequel le joug de portage (1) présente un rembourrage sur son côté tourné vers la personne.

12. Système de portage selon l'une quelconque des revendications précédentes, dans lequel un renfort est ménagé dans ou sur la zone avant d'au moins une bretelle (5), destiné à empêcher la personne utilisant le système de portage de se pencher.

13. Système de portage selon l'une quelconque des revendications précédentes, dans lequel l'armature dorsale (4), les bretelles (5) et la ceinture de hanche (3) sont intégrées dans un corset ou un exosquelette.

14. Système de portage selon l'une quelconque des revendications précédentes, comprenant en outre des logements de prise dans lesquels des poignées d'une brouette peuvent être logées, les logements de prise étant disposés de chaque côté sur des attaches, chaînes ou barres reliées aux points récepteurs de charge (2).

15. Procédé destiné à l'utilisation par une personne d'un dispositif selon la définition mentionnée dans l'une quelconque des revendications précédentes, comprenant les étapes de:
- fourniture du système de portage ;
- application des bretelles (5) et ajustement de celles-ci de manière à ce que la ceinture de hanche (3) se trouve à la hauteur du bassin de la personne ;
- application et serrage de la ceinture de hanche (3) ;
- ajustement de l'armature dorsale (4) de manière à ce que seulement sa zone inférieure (4A') s'appuie contre le dos de la personne, alors que sa zone supérieure (4B') est distancée de celui-ci ;
- mise de la charge aux points récepteurs de charge (2) du joug de portage (1) ;
- portage ou déplacement de la charge ;
les forces de traction ayant prise sur le joug de portage (1) étant transmises à la ceinture de hanche (3) par l'intermédiaire de l'armature dorsale (4) sans que le joug de portage (1) et la zone supérieure (4B') de l'armature dorsale (4) ne soient en contact avec la personne.
